Europäisches Patentamt

European Patent Office

Office européen des brevets

(19)

(11) Numéro de publication: **0 065 931**

**A1**

(12)

# DEMANDE DE BREVET EUROPEEN

(21) Numéro de dépôt: **82810074.3**

(22) Date de dépôt: **17.02.82**

(51) Int. Cl.³: **F 16 B 21/06**
**F 16 G 15/04, A 44 C 11/02**

(30) Priorité: **19.05.81 CH 3271/81**

(43) Date de publication de la demande:
**01.12.82 Bulletin 82/48**

(84) Etats contractants désignés:
**AT CH DE FR GB IT LI**

(71) Demandeur: **Pagola, Jesus**
**C/o Garage Lausanne Pagola & Cie Av. de la Harpe 1**
**CH-1007 Lausanne(CH)**

(71) Demandeur: **Pagola, Michel**
**Av. de Montchoisi 63**
**CH-1006 Lausanne(CH)**

(72) Inventeur: **Pagola, Jesus**
**C/o Garage Lausanne Pagola & Cie Av. de la Harpe 1**
**CH-1007 Lausanne(CH)**

(72) Inventeur: **Pagola, Michel**
**Av. de Montchoisi 63**
**CH-1006 Lausanne(CH)**

(74) Mandataire: **Kirker, Gaylord Emile et al,**
**c/o KIRKER & CIE 14, Rue du Mont-Blanc Case postale 872**
**CH-1211 Genève 1(CH)**

(54) **Dispositif de liaison détachable entre deux pièces.**

(57) L'un des organes (1) du dispositif porte des billes (7) formant verrous, tandis que l'autre organe (10) présente une cavité (13) pour recevoir ces billes. Un élément de blocage (3) est monté dans le premier organe (1) pour coopérer avec les billes (7) ; il est mobile entre une position inactive où il permet aux billes (7) d'entrer librement dans la cavité (13) susdite et d'en sortir librement, et une position active où il bloque les verrous (7) dans cette cavité (13) après qu'on les y a amenés, ce qui assure alors la liaison des deux organes (1, 10) et des pièces auxquelles ils sont respectivement fixés. Des passages (9, 14) permettent d'exercer une force sur l'élément de blocage (3) lorsqu'on veut séparer les organes (1, 10) l'un de l'autre.

FIG. 1

FIG. 2

1

## Dispositif de liaison détachable entre deux pièces

On connaît des dispositifs de liaison détachable entre deux pièces qui comportent un premier organe destiné à être solidaire de l'une des pièces, qui porte au moins un verrou, et un second organe, destiné à être solidaire de l'autre pièce, présentant une cavité pour recevoir le ou les dits verrous, ainsi qu'un élément de blocage monté sur l'un de ces organes et prévu pour coopérer avec ce ou ces verrous et mobile entre une position inactive où il permet aux verrous d'entrer librement dans la cavité susdite et d'en sortir librement, et une position active où il bloque le ou les verrous dans cette cavité après qu'on les y a amenés, et ainsi assure la liaison des deux dites pièces.

Ces dispositifs ont toutefois l'inconvénient que pour permettre aux verrous d'entrer dans la cavité, il faut agir sur un organe de manoeuvre du dispositif.

La présente invention vise à éviter cet inconvénient et à permettre l'assemblage des deux organes simplement en les engageant l'un dans l'autre, sans manoeuvre supplémentaire.

Le dispositif de liaison selon l'invention est conforme à la revendication 1.

Le dessin annexé représente deux formes d'exécution du dispositif de liaison selon l'invention.

Figure 1 est une vue en coupe axiale d'un organe de la première forme d'exécution.

Figure 2 est une vue axiale d'un deuxième organe de la même forme d'exécution.

Figure 3 est une coupe transversale d'un organe de la deuxième forme d'exécution.

Figure 4 est une coupe transversale d'un deuxième organe de cette même forme d'exécution.

1a

Figure 5 est une vue en perspective de la deuxième forme d'exécution montrant les organes selon figures 3 et 4 réunis.

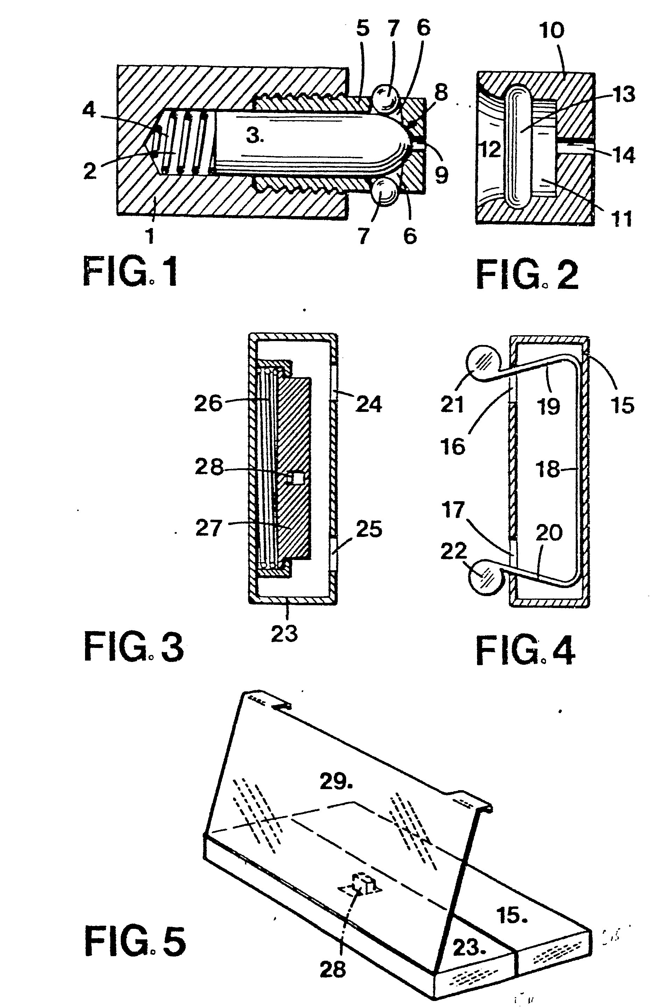

La forme d'exécution selon figures 1 et 2 comprend un premier organe représenté sur la figure 1, un deuxième organe représenté sur la figure 2. Ces deux organes sont destinés à être solidaires respectivement de deux pièces non représentées, qu'il s'agit de relier l'une à l'autre de façon détachable. L'organe selon figure 1 comprend un corps 1 à l'intérieur duquel il est prévu une cavité axiale 2 dans laquelle sont logés un élément de blocage 3 pouvant coulisser dans la cavité 2 et un ressort de compression 4 agissant sur l'élément de blocage 3 pour le solliciter vers la droite sur la figure 1. Un tube 5 est vissé dans la partie de droite sur la figure 1 de la cavité 2 qui, à cet effet, est filetée.

L'élément 3 est prévu pour glisser aussi à l'intérieur du tube 5. Ce tube présente des ouvertures radiales 6 dans chacune desquelles est disposée une bille 7. Ces ouvertures présentent une certaine conicité telle que les billes 7 peuvent faire saillie d'une certaine quantité à l'extérieur du tube 5, mais ne peuvent pas s'échapper vers l'extérieur des ouvertures 6. L'extrémité de droite sur la figure 1 de l'élément de blocage 3 présente une forme hémisphérique ou analogue. Le tube 5 est fermé à son extrémité de droite et présente une creusure sphérique 8 contre laquelle l'élément 3 vient buter sous l'action du ressort 4. L'extrémité hémisphérique de l'élément 3 est dimensionnée de telle façon que lorsque cet élément se trouve à fond de course à droite et bute en 8, les billes 7 font saillie au maximum à l'extérieur du tube 5, tandis que lorsque cet élément 3 se trouve à fond de course à gauche, le ressort 4 étant alors comprimé, les billes 7 soient complètement effacées dans les ouvertures 6 mais soient retenues néammoins dans ces ouvertures par l'élément 3 lui-même.

Dans le fond du tube 5 il est prévu un trou axial 9 dont on expliquera plus loin la raison d'être.

Le deuxième organe du dispositif, qui est représenté sur la figure 2, comprend un corps 10 de forme générale cylindrique présentant à son intérieur une cavité 11 dont la partie de gauche va en s'évasant, comme on le voit en 12. Une gorge annulaire 13 est pratiquée dans le corps 10, la section transversale de cette gorge étant semi-circulaire, de même diamètre que celui des billes 7. Un trou axial 14 est prévu dans le corps 10. Le fonctionnement du dispositif selon les figures 1 et 2 est le suivant. Lorsqu'on engage la partie du tube 5 qui est à l'extérieur de 1, à l'intérieur de la cavité 11, les billes 7 venant en contact avec la partie 12 sont contraintes de se rapprocher de l'axe de la partie 1, obligeant ainsi l'élément 3 à se déplacer vers la gauche en comprimant le ressort 4. Enfonçant le tube 5 jusqu'à ce qu'il vienne buter contre le fond de la cavité 11, il arrive que les billes 7 se trouvent à ce moment en face de la gorge annulaire 13. Dès lors le ressort 4 qui continue d'agir sur l'élément 5 fait que cet élément chasse les billes vers l'extérieur et les oblige à s'engager dans la gorge 13. Dès ce moment, les parties 1 et 2 sont solidarisées et n'importe quelle traction ne peut plus les séparer. Pour dégager l'un de l'autre les organes selon figures 1 et 2, il suffit d'engager une tige rigide dans le trou 14 et dans le trou 9 pour venir faire pression sur l'extrémité de droite de l'élément 3, afin de comprimer le ressort 4. En même temps, on exerce une force tendant à séparer 1 de 10. Ainsi, l'élément 3 n'obligeant plus les billes à faire saillie hors du tube 5, ces billes quittent la gorge 13 et ne s'opposent plus au retrait du tube 5. Ainsi les deux organes selon figures 1 et 2 sont libérés l'un de l'autre.

S'il s'agit d'accoupler des pièces de grande dimension et de poids important, on pourra prévoir que les trous 14 et 9 sont destinés non pas à laisser passer une tige venant agir sur l'élément 3, mais sont prévus pour être reliés à une source de fluide sous pression au moment où il s'agit de séparer les deux organes du dispositif.

La forme d'exécution suivant figures 3, 4 et 5 est destinée spécialement à réunir deux parties d'un bracelet et est représentée à très grande échelle pour faciliter la compréhension. Dans la réalité, cette forme d'exécution sera de très petite dimension, extrêmement plate. Elle comprend deux organes représentés respectivement sur les figures 3 et 4. L'organe selon figure 4 comporte un boîtier 15 de forme parallélipipédique plane présentant deux ouvertures 16, 17 et à l'intérieur duquel est fixée une tige élastique 18 dont les extrémités 19 et 20 sont recourbées et se terminent chacune par une tête 21, 22 de forme plate. Les parties 19, 20 passent à travers les ouvertures 16, 17 et les têtes 21, 22 sont situées à l'extérieur du boîtier 15. Les ouvertures 16 sont dimensionnées de façon à permettre aux parties 19, 20 de se rapprocher l'une de l'autre d'une quantité appréciable.
A l'état de repos qui est représenté sur la figure 4, les
parties 19, 20 appuient élastiquement contre le bord extérieur des ouvertures 16, 17.

L'autre organe représenté sur la figure 3 a aussi
la forme d'un boîtier plat parallélipipédique 23 qui présente
deux ouvertures 24, 25 disposées pour être amenées à coïncider
avec les ouvertures 16, 17 lorsque l'on amène les boîtiers
15 et 23 à faire contact comme représenté sur la figure 5.
Les ouvertures 24, 25 sont de dimension juste suffisante
pour laisser passer à travers elles les têtes 21, 22, en les
obligeant toutefois à se rapprocher l'une de l'autre lors du
passage à travers ces ouvertures. A l'intérieur du boîtier 23
est disposé un ressort de compression 26 et un verrou 27 sur
lequel agit ce ressort. Ce verrou est représenté sur la figure
3 dans sa position extrême de droite.

Le fonctionnement du dispositif selon les figures
3-5 est le suivant. Les deux organes 15 et 23 étant séparés
comme représenté sur ces figures, lorsqu'il s'agit de les
solidariser l'un de l'autre, on rapproche les boîtiers 15, 23
l'un de l'autre et on force les têtes 21, 22 à pénétrer à
travers les ouvertures 24, 25, obligeant du même coup le verrou
27 à se déplacer vers la gauche en comprimant le ressort 26.
Lors de leur passage à travers les ouvertures 24, 25, les têtes
21, 22 ont été obligées de se rapprocher au maximum l'une de
l'autre, mais au moment où elles ont franchi les ouvertures 24,
25 et se trouvent entièrement engagées dans le boîtier, sous
l'effet de l'élasticité des parties 19, 20, ces deux têtes
s'écartent l'une de l'autre et en même temps elles cessent
d'agir sur le verrou 27 qui revient vers la droite dans la
position représentée à la figure 3. Dès lors, ce verrou
s'oppose à tout rapprochement des têtes 21, 22 et les deux
organes selon figures 3 et 4 se trouvent solidaires l'un de
l'autre, comme représenté sur la figure 5. Pour les dégager l'un de l'autre, il est prévu un doigt d'actionnement 28 solidaire du verrou 27 et faisant saillie hors du boîtier 23 comme on le voit sur la figure 5. Il suffit d'agir avec l'ongle ou le doigt sur cette partie 28 pour faire reculer le verrou en comprimant momentanément le ressort 26 pour que les organes 15, 23 puissent être éloignés l'un de l'autre. En effet, le verrou 27 étant déplacé vers la gauche il ne s'oppose plus au rapprochement des têtes 21, 22 et ces têtes ainsi rapprochées ne peuvent être dégagées sans obstacle du boîtier 23.

Un couvercle articulé 29 est prévu par mesure de sécurité sur le boîtier 23 pour venir recouvrir la face supérieure des boîtiers 15 et 23 et, surtout, le doigt d'actionnement 28. Ce couvercle peut venir s'accrocher à cran sur l'extérieur du boîtier 15. Il sert à éviter tout actionnement fortuit du doigt 28 qui risquerait de provoquer l'ouverture du dispositif de liaison. Ceci est particulièrement important dans le cas d'un bracelet ou d'un collier.

Dans une variante de la deuxième forme d'exécution, on pourrait prévoir un dispositif qui n'aurait pas deux têtes telles que 21 et 22 mais une seule.

Dans une autre variante, les têtes 21, 22 pourraient être de forme différente et montées mobiles, par exemple à pivot, sur des bras rigides au lieu de bras élastiques 19, 20.

Des dispositifs du genre décrit peuvent trouver leur application pour l'assemblage de toutes pièces mécaniques, pour l'attelage de véhicules, pour la fixation de tout objet à un autre, pour réaliser un fermoir de bracelet ou autre, etc..

6

REVENDICATIONS

1. Dispositif de liaison détachable entre deux pièces, comprenant un premier organe (1), destiné à être solidaire de l'une des pièces, qui porte au moins un verrou (7), et un second organe (10), destiné à être solidaire de l'autre pièce, présentant une cavité (13) pour recevoir le ou les dits verrous (7), ainsi qu'un élément de blocage (3) monté sur l'un de ces organes et prévu pour coopérer avec ce ou ces verrous (7) et mobile entre une position inactive où il permet aux verrous (7) d'entrer librement dans la cavité (13) susdite et d'en sortir librement, et une position active où il bloque le ou les verrous (7) dans cette cavité (13) après qu'on les y a amenés, et ainsi assure la liaison des deux dites pièces, caractérisé en ce qu'il comporte des moyens (12) pour forcer automatiquement en position inactive le ou les verrous (7) et l'élément de blocage (3) lorsqu'on amène le premier organe (1) et le second organe (10) susdits en position de coopération, un moyen (9, 14) étant prévu pour amener à volonté l'élément de blocage (3) en position inactive, sous l'action d'une force extérieure, lorsqu'on veut détacher ces deux organes (1, 10) l'un de l'autre.

2. Dispositif selon la revendication 1, caractérisé en ce que chaque verrou (7) est disposé dans un trou (6) sensiblement radial d'un tube (5) solidaire du premier organe (1), l'élément de blocage (3) étant disposé dans ce tube (5) pour y coulisser axialement entre sa position active, où il oblige le ou les verrous (7) à faire saillie hors du tube (5), et sa position inactive, où les verrous (7) sont libres de s'effacer de la surface extérieure du tube (5).

3. Dispositif selon la revendication 2, caractérisé en ce que l'élément de blocage (3) est constamment sollicité élastiquement vers sa position active, un moyen (9, 14) étant prévu pour permettre d'exercer sur cet élément (3) une force contraire afin de l'amener en position inactive.

4. Dispositif selon la revendication 3, caractérisé
en ce que le moyen susdit est un orifice axial (9) prévu dans
une extrémité du dit tube (5) et (14) dans le second organe
(10), pour laisser passer à volonté une tige actionnée à
la main pour amener l'élément de blocage (3) dans sa position
inactive.

5. Dispositif selon la revendication 3, caractérisé
en ce que le moyen susdit est un conduit prévu pour agir
axialement sur l'élément de blocage, par pression de fluide.

6. Dispositif selon la revendication 1, caractérisé
en ce que chaque verrou est constitué par une tête (21, 22)
située à l'extrémité d'un bras élastique (19, 20) solidaire,
par son autre extrémité, du premier organe (15) susdit,
tandis que le second (23) de ces organes a la forme d'un
boîtier présentant dans une paroi latérale au moins un trou
(24, 25) constituant un libre passage pour la tête (21, 22)
susdite, l'élément de blocage (27) étant disposé dans ce
boîtier (23), soumis à l'action d'un ressort (26) le sollicitant vers sa position active, où il empêche la tête (21, 22)
du ou des verrous de sortir du boîtier (23), un moyen (28)
étant prévu pour agir en sens inverse, à la main, sur cet
élément de blocage (27), pour laisser passer librement la ou
les têtes de verrou (21, 22) à travers le trou (24, 25) correspondant du boîtier (23).

7. Dispositif selon la revendication 6, caractérisé
en ce que le boîtier et la ou les têtes de verrou sont plats.

Jésus PAGOLA et Michel PAGOLA

FIG. 1

FIG. 2

FIG. 3

FIG. 4

FIG. 5

))) Office européen
des brevets

**RAPPORT DE RECHERCHE EUROPEENNE**

Numéro de la demande

EP  82  81  0074

| | DOCUMENTS CONSIDERES COMME PERTINENTS | | |
|---|---|---|---|
| Catégorie | Citation du document avec indication, en cas de besoin, des parties pertinentes | Revendication concernée | CLASSEMENT DE LA DEMANDE (Int. Cl. ³) |
| X | FR-A- 426 472 (M.M. GUERNE)<br>* En entier * | 1-3 | F 16 B  21/06<br>F 16 G  15/04<br>A 44 C  11/02 |
| | --- | | |
| X | GB-A-2 000 238 (S.A. LES FABRIQUES DE BALANCIERS REUNIES)<br>* Abrégé; figure 1; page 1, ligne 91 - page 3, ligne 27* | 1-3 | |
| | --- | | |
| X | DE-A-1 816 626 (PASBRIG, MAX)<br>* Pages 6-16; figures 2,5,6 * | 1,6,7 | |
| | --- | | |
| X | DE-C- 266 807 (CARL W. MEYER)<br>* En entier * | 1,6 | |
| | --- | | |
| X | GB-A-1 422 321 (ELLIS LTD.)<br>* En entier * | 1-3 | |
| | --- | | DOMAINES TECHNIQUES RECHERCHES (Int. Cl. ³) |
| X | US-A-3 714 802 (L.H. MORSE)<br>* Figures 1,2; colonne 2, ligne 31 - colonne 5, ligne 10 * | 1-3 | |
| | --- | | F 16 B<br>F 16 G |
| A | FR-A-1 102 040 (M.L. DAVOINE)<br><br>* En entier * | | A 44 C<br>E 05 B |
| | ----- | | |

Le présent rapport de recherche a été établi pour toutes les revendications

| Lieu de la recherche | Date d'achèvement de la recherche | Examinateur |
|---|---|---|
| LA HAYE | 13-09-1982 | MUTTOCK N.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..................................................
& : membre de la même famille, document correspondant

OEB Form 1503. 03.82